(19) **Europäisches Patentamt / European Patent Office / Office européen des brevets**

(11) **EP 1 518 370 B1**

(12) **EUROPEAN PATENT SPECIFICATION**

(45) Date of publication and mention
of the grant of the patent:
**25.06.2008 Bulletin 2008/26**

(51) Int Cl.:
**H04L 12/56** (2006.01)

(21) Application number: **02746244.9**

(86) International application number:
**PCT/SE2002/001237**

(22) Date of filing: **20.06.2002**

(87) International publication number:
**WO 2004/002085 (31.12.2003 Gazette 2004/01)**

(54) **APPARATUS AND METHOD FOR RESOURCE ALLOCATION**

VORRICHTUNG UND VERFAHREN ZUR BETRIEBSMITTELZUTEILUNG

APPAREIL ET PROCEDE D'ATTRIBUTION DE RESSOURCES

(84) Designated Contracting States:
**AT BE CH CY DE DK ES FI FR GB GR IE IT LI LU MC NL PT SE TR**

(43) Date of publication of application:
**30.03.2005 Bulletin 2005/13**

(73) Proprietor: **TELEFONAKTIEBOLAGET LM ERICSSON (publ)**
**164 83 Stockholm (SE)**

(72) Inventors:
• **WIBERG, Niclas**
**S-585 97 Linköping (SE)**
• **STRÖMSÖE, Mikael**
**S-116 31 Hägersten (SE)**
• **PEISA, Janne**
**FIN-02130 Espoo (FI)**

• **SAGFORS, Mats**
**FIN-02400 Kyrkslätt (FI)**

(74) Representative: **Kühn, Friedrich Heinrich**
**Ericsson AB**
**Patent Unit Radio Networks**
**164 80 Stockholm (SE)**

(56) References cited:
**EP-A2- 1 096 737**   **EP-A2- 1 128 610**
**WO-A1-93/20637**

• **FIROIU VICTOR ET AL.: 'A study of active queue management for congestion control' INFOCOM 2000 NINETEENTH ANNUAL JOINT CONFERENCE OF THE IEEE COMPUTER AND COMMUNICATIONS SOCIETIES. PROCEEDINGS IEEE 26 March 2000 - 30 March 2000, TEL AVIV, ISRAEL, pages 1435 - 1444, XP010376080**

Description

**TECHNICAL FIELD OF THE INVENTION**

The present invention relates to the handling of link and cell congestion in packet transmission networks and more particularly to the early detection of congestion and the implementation of mechanisms for obviating the consequences of congestion.

**DESCRIPTION OF RELATED ART**

In packet based communication systems, i.e. in which information to be transmitted is divided into a plurality of packets and the individual packets are sent over a communication network, variable bit rates occur. It is therefore known to provide queue buffers at various points in the network to accommodate for sudden bursts in the load.

A phenomenon that is known in packet transmission networks is that of link congestion. Link congestion implies a state in which it is not possible to readily handle the number of data packets that are required to be transported over that connection or link. As a consequence of congestion at a given link, the number of data packets in a queue buffer associated with said link will increase and buffer overload will occur. In response to a link congestion condition, it is known to implement a data packet dropping mechanism referred to as "drop-on-full". According to this mechanism, upon receipt of a new data packet at the queue buffer, a queue length related parameter, such as the actual queue length or the average queue length, is compared to a predetermined threshold. If the predetermined threshold is exceeded, then a data packet is dropped. The threshold indicates the "full" state of the queue.

The so-called "Transmission Control Protocol" (TCP) is a commonly used protocol for controlling the transmission of packets over an IP network. When a TCP connection between peer hosts is initiated, TCP starts transmitting data packets at a relatively low rate, i.e. so called "slow start mode". The transmission rate is successively increased in response to receipt of acknowledgement from the receiver. If data packets are detected as missing, then TCP interprets this as an indication of congestion and reduces its load.

Compared to wired networks, wireless links are equipped with a rather limited capacity. This is why it can be expected that the wireless link will often be the bottleneck of an end-to-end connection. This means that excessive load of a TCP connection will eventually build up in the buffer prior to the congested link. Since the buffer contributes to the end-to-end delay, it is desirable to keep the buffer as small as possible since large delays cause sluggishness to interactive traffic. At the same time, however, the buffer should be large enough to smooth out load variations, in order to utilise the capacity allocated for the link.

Further, the dynamics of TCP is strongly dependent how or in which order segments are discarded. Consecutive segment losses are likely to put the connection into TCP slow start, which is particularly bad for high-latency links, such as wireless links.

To fulfil these requirements on the buffer, Active Queue Management (AQM) may be used. The principle of Active Queue Management is to detect congestion at an early stage, before the buffer overflows. When congestion or near congestion is detected, it is alleviated by e.g. discarding packets or signalling congestion using Explicit Congestion Notification (ECN) according to some given Active Queue Management algorithm. Typically, an algorithm is used for indicating congestion, without discarding all incoming packets.

Random Early Detection (RED) - see e.g. Floyd, S. and Jacobson, V. "Random Early Detection Gateways for Congestion Avoidance", IEEE/ACM Transactions on Networking, 1(4), August 1993 - is an Active Queue Management method that has found wide acceptance within Internet Routing. The RED principle is that an incoming packet is accepted if the queue level is less than a low fixed queue threshold, but discarded if the queue level is greater than a high fixed queue threshold. For intermediate queue fill levels, incoming packets are discarded with a certain probability.

Other solutions for Active Queue Management algorithms are also described in EP 124 99 72, GB 2 372 172 and EP 112 86 10.

In systems with limited resources, congestion may also occur in a larger concept than in the individual link and some sort of resource management may therefore be employed. This is especially the case in mobile networks.

A mobile network includes among other things a set of base stations or node Bs, each serving a given cell or a number of cells. A mobile station or user equipment may connect to one or more base stations to make or receive a call. If the mobile station moves from one cell to another during a call, handover may occur, meaning that the mobile station now communicates with another cell and possibly another base station. Different types of handover exist.

A link is in this context a service provided for transmission of data packets between a mobile network and a mobile station or user equipment. Communication from the mobile network to the mobile station or user equipment is referred to as a downlink, while communication from the mobile station or user equipment to the mobile network is referred to as an uplink.

The code division multiple access (CDMA) communication method was developed to allow multiple users to share radio communication resources. In the general CDMA method, each user is assigned a unique code sequence to be used to encode its information signal. A receiver, knowing the code sequences of the user, can decode the received signal to reproduce the original information signal. The use of the unique code sequence during modulation provides for an enlarging of the spectrum of the transmitted signal resulting in a spread spectrum signal. The spectral spreading of the transmitted signal gives rise to the multiple access capability of CDMA.

If multiple users transmit spread spectrum signals at the same time, the receiver will still be able to distinguish a particular user's signal, provided that each user has a unique code and the cross-correlation between codes is sufficiently low. Ideally, the cross-correlation should be zero, i.e., the codes should be orthogonal in the code space. Correlating a received signal with a code signal from a particular user will result in the despreading of the information signal from that particular user, while signals from other users will remain spread out over the channel bandwidth.

However, the number of orthogonal codes in a system is limited. As a result, each cell has a limited number of orthogonal channelization codes that are assigned different physical channels. The number of orthogonal channelization codes is dependent upon their spreading factor, which is related to the physical channel bitrates. This gives rise to the well-known downlink channelization code limitation inherent in CDMA.

In radio resource management, congestion may occur e.g. on cell level. Several types of Radio Resource Management (RRM) functions exist, such as handover, power control, admission control and load control. The following are examples from a radio system using Wideband Code Division Multiple Access (WCDMA), but similar things happens also in other mobile systems and might happen also in other systems.

The purpose of admission control is to ensure that there are free radio resources for an intended call with required signal-to-interference ratio and bit rate or equivalent. The purpose of load control is to maintain the use of radio resources of the network within given limits.

Admission control is normally performed when a mobile station initiates communications in a new cell, either through a new call or handover. Furthermore, admission control is performed when a new service is added during an active call. In general, the admission control procedure ensures that there exist a free code to use for a new call and that the interference created after adding a new call does not exceed a prespecified threshold. Further, the admission control should also check that there is enough base station transmission power for the new call. Admission control should be done separately for uplink and downlink. This is especially important if the traffic is highly asymmetric. Typical criteria for admission control are call blocking and call dropping. Call blocking occurs when a new user is denied access to the system. Call dropping means that a call of an existing user is terminated.

The basic principle of load control is the same as admission control. While admission control is carried out as a single event, load control is a continuous process where e.g. the interference is monitored. Load control measures the load factor of the cell, and, if the predefined load factor is exceeded, i.e. the cell is congested, then the network may e.g. reduce the bit rate of certain users, delay the transmission for certain users or drop low priority calls. If there is an underload, load control may increase the bit rates of those users who can handle higher bit rates.

One version of load control is called channel switching (ChSw) or rate switching. The main idea is that if a user needs a low bit rate then he shares a common channel with other users. If the user should then need more capacity he can be switched over to a dedicated channel which is continuously reserved just for him. If the user on the other hand should need less capacity he can be switched to a common channel, if the user is using a dedicated channel.

A variant of channel switching is described in WO99/66748. Several methods are described on how to determine when to switch. According to one embodiment the buffer fill level can be used; if the queue length in the buffer is long this is a sign that more capacity is needed and vice versa. Two fixed thresholds in the buffer may be used to indicate when switching should take place, in order to create a hysteresis to avoid frequent switchings.

WO99/66748 further describes the case when there besides the previously mentioned buffer also exists a packet router buffer in a packet router. In this case it is described a second embodiment with a "back pressure" signal is transmitted from the buffer to the packet router if the queue length in the buffer becomes too long, whereupon temporarily buffering takes place in the packet router buffer rather than in the buffer.

In WO99/66748 these two embodiments can be combined and it can also be checked if the buffer is full because the connection is temporarily broken instead of because of increasing traffic. Further, other traffic measures can be used, instead or as a complement, e.g. packet arrival time, packet arrival rate, packet density, connection's bit rate(s), current number of idle devices or current number of idle spreading codes.

Thus, Radio Resource Management adapts the link bit rate after the load, while - given a certain link bit rate - Active Queue Management adapts the load to the link bit rate.

A problem is that the Radio Resource Management and Active Queue Management may have conflicts in the objectives for the buffer fill-level: Active Queue Management tries to maintain a 'low' buffer fill-level to improve interactivity over the link. A small buffer, on the other hand, makes it difficult for Radio Resource Management to use the buffer fill-level as a measurement for prediction of future capacity needs of a link.

## SUMMARY OF THE INVENTION

The object with the invention is to design a system with a well behaving interplay between TCP congestion control, Active Queue Management and Radio Resource Management.

The problem with earlier solutions is that they have not realised that this has to be done. They have not understood that problems, such as oscillations, may occur in systems where Active Queue Management and Radio Resource Management work independently. The interplay between Active Queue Management and TCP is in prior art fairly well understood. One assumption in prior art is, however, that the capacity of the bottleneck link remains constant. However, this is not in line with the reality of a resource limited system.

In the invention it is noted that the Radio Resource Management and the Active Queue Management may have conflicts in the objectives for the buffer fill-level: Active Queue Management tries to maintain a 'low' buffer fill-level to improve interactivity over the link. A small buffer, on the other hand, makes it difficult for Radio Resource Management to use the buffer fill-level as a measurement for prediction of future capacity needs of a link.

The solution according to the present invention is for upswitch:

- determining link resource status;
- if link congestion is determined then

  (a)determining if it is possible to allocate more link capacity;
  (b)allocating more link capacity when it is possible to allocate more link capacity;
  (c)alleviating link congestion using Active Queue Management when it is not possible to allocate more link capacity.

An advantage with this method is that it can be ensured that Active Queue Management has not asked TCP to reduce its load at the same time as Radio Resource Management is providing more resources. The risk of conflicting actions is removed. As a consequence, the allocated capacity is better utilized, because the TCP load is not reduced prior to the up-switch of the capacity.

Further, the queue fill-state may not be a good measurement for Radio Resource Management, unless Active Queue Management and Radio Resource Management are integrated, as in the proposed method. With the present method, the main measurement for the Radio Resource Management decision is the up-switch request by Active Queue Management. Other measurements (like user activity statistics) may be used to support the Radio Resource Management decision.

The corresponding solution for forced downswitch will then be:

- determining cell resource status;
- if cell congestion is detected then

  (a)determining that it is necessary to switch down bit rate or rates in at least one link;
  (b)alleviating link congestion using Active Queue Management; and
  (c)switching down said bit rate or rates.

An advantage is because Active Queue Management is informed of the rate reduction in advance, it can start to reduce the source rate before the down-switch, thereby avoiding excessive buffering delays or buffer overflow.

Further, because the link rate is still high when the Active Queue Management actions start, the Active Queue Management actions (packet drop or ECN marking) take effect faster.

## DESCRIPTION OF THE DRAWINGS

Figure 1 discloses a schematic view of a system including the invention
Figure 2 discloses a method according to the most general aspect of the invention

## DESCRIPTION OF PREFERRED EMBODIMENTS

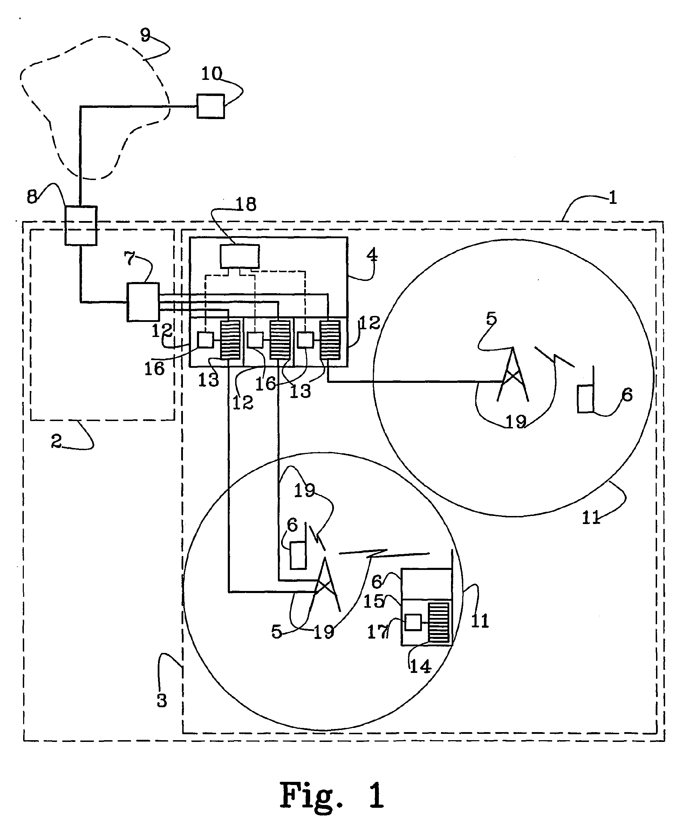

Figure 1 illustrates schematically, according to the invention, a Universal Mobile Telecommunications system (UMTS) network 1 using Wideband Code Division Multiple Access (WCDMA). The UMTS network 1 includes a core network 2 and a UMTS Terrestrial Radio Access Network (UTRAN) 3. The UTRAN 3 includes a number of Radio Network Controllers (RNC) 4 - of which only one is drawn for the sake of clarity. Each of the Radio Network Controllers 4 is coupled to a set of neighbouring base stations, normally called Node Bs 5. Each Node B 5 is responsible for a given cell 11 and the controlling Radio Network Controller 4 is responsible for routing user and signalling data between that Node B 5 and the core network 2. A general outline of the UTRAN 3 is given in Technical Specification TS 25.401 V3.2.0 of the 3rd Generation Partnership Project. Figure 1 also illustrates mobile terminals or User Equipments (UE) 6, a Serving GPRS Support Node (SGSN) 7 and a GPRS Gateway Support Node (GGSN) 8. The Serving GPRS Support Node 7 and the Gateway GPRS Support Node 8 may e.g. provide packet switched data services to the User Equipment 6 via the UTRAN with the Gateway GPRS Support Node being coupled to e.g. the Internet 9, whereupon the User Equipment 6 may communicate with a node 10 connected to the Internet 9.

User data received at a Radio Network Controller 4 from the core network 2 is stored at a Radio Link Control (RLC) entity 12 in one or more buffers 13. User data generated at a User Equipment 6 is stored in buffers 14 of a peer Radio Link Control entity 15 at the User Equipment 6. User data (extracted from the buffers) and signalling data is carried between a Radio Network Controller 4 and a User Equipment 6 using Radio Bearers. Typically, a User Equipment is allocated one or more Radio Bearers each of which is capable of carrying a flow of user or signalling data. Radio Bearers are mapped onto respective logical channels. At a Media Access Control (MAC) layer, a set of logical channels is mapped in turn onto a transport channel. Several transport channels are in turn mapped at the physical layer onto one or more physical channels - which thus may include one or more links 19 - for transmission over the air interface between a Node B 5 and a User Equipment 6.

Each link is thus supported by one buffer in the Radio Network Controller 4 and one buffer in the User Equipment 6. Each of the buffers 13, 14 is controlled by Active Queue Management (AQM) 16, 17 operating separately on each buffer 13, 14 to avoid link congestion. Further, in each Radio Network Controller 4 is included a Radio Resource Management 18, which controls the allocation of radio resources to channels and tries to avoid cell congestion.

According to other embodiments of the invention a buffer may work for more than one incoming and/or outgoing link. This may e.g. be the case in an Internet router. Further, Active Queue Management may work on more than one buffer simultaneously. In particular, an alternative would be to have a general Active Queue Management working to control the average traffic in a whole cell. Finally, of course, Active Queue Management needs not be performed on all buffers.

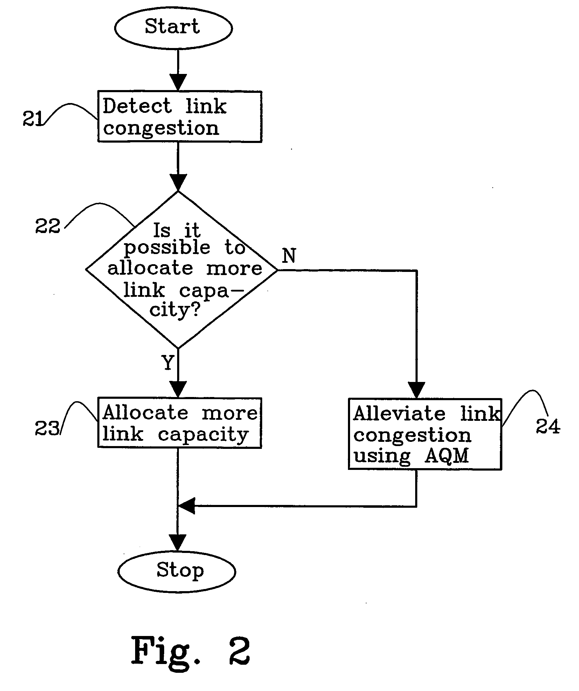

According to the present invention Radio Resource Management and Active Queue Management are co-ordinated. An overview of a process for upswitching is seen in Fig 2. First, link congestion is detected, block 21. Then it is determined if it is possible to allocate more link capacity, block 22. If it is possible to allocate more link capacity, then more link capacity is allocated, 23, else link congestion is alleviated using Active Queue Management.

According to one embodiment, link congestion may be detected by setting a congestion threshold Th in the buffer. When the queue length is longer then the congestion threshold Th, then link congestion is presumed to be near. The natural action would then be, according to prior art, to use Active Queue Management to take action. However, it might happen that the congestion is local and that it would be possible to allocate more bandwidth. Thus, according to the present invention, Radio Resource Management uses the same congestion threshold as an indication on a need for higher bit rate and determines if it is possible to allocate more bandwidth. E.g. if the user using the congested link is using a common channel that he is sharing with other users, then it might be possible to instead allocate a dedicated channel just for him. Alternatively, the user might e.g. be given a higher bit rate within the same common or dedicated channel.

Naturally, other criteria may be used alternatively to a congestion threshold or in combination therewith to take the decision to switch channel. Such criteria may be traffic intensity, packet arrival times, time between packets etc.

When Radio Resource Management has determined if it is possible to allocate more bandwidth or not, this should be reported to Active Queue Management. This can be done by signalling from Radio Resource Management to Active Queue Management. Alternatively, a timer can be introduced on the congestion threshold for the Active Queue Management. Thus, if the congestion threshold has been exceeded for a certain amount of time, then it can be presumed that Radio Resource Management has no further bandwidth to allocate and that the Active Queue Management needs to take action.

If the Active Queue Management finds out that more bandwidth is allocated, it takes no action. However, if the Active Queue Management finds out that more bandwidth is not allocated, then it may alleviate link congestion. This may be done by dropping or marking packets according to some predefined algorithm, preferably avoiding to drop subsequent packets by intent, in order to avoid causing TCP slow start in systems where TCP or similar is used. Marking of packets may be done e.g. by setting an explicit congestion (ECN) flag in the header of a packet. When TCP or similar used and the sender detects that the link is congested, then TCP will reduce its load and send data packets at a lower rate.

The congestion threshold may be fixed, but preferably it is movable. It can then be moved according to different primary criteria such as link characteristics i.e. e.g. round trip time (RTT) of the link and data rate or bit rate of the link. The link characteristics may then be used to calculate link capacity and thereby to set the congestion threshold. This gives a base value $Th_{RRM}$ on the placement of the congestion threshold. It can be said e.g. that if the bit rate is high, then it can be permitted to have a longer queue length in the buffer and vice versa, considering that the buffer will be emptied quicker when using a higher bit rate.

In order to employ the Active Queue Management, according to one alternative, secondary criteria may also be used to move the congestion threshold, in order to give a more detailed placement of the congestion threshold. Then the congestion threshold Th may be calculated according to the following formula:

$$Th = Th_{RRM} + \Delta Th_{AQM} \qquad (1)$$

where $\Delta Th_{AQM}$ is an adjustment calculated according to the secondary criteria according to Active Queue Management. This adjustment may e.g. be calculated by analysing whether a packet has been dropped or not. If a packet has been dropped, then $\Delta Th_{AQM}$ is increased with a positive constant $\delta$, unless the congestion threshold Th has reached a maximum Active Queue Management threshold $Th_{AQMmax}$. If the queue length is determined to be less than the congestion threshold by a predetermined amount - preferably larger than $\delta$ in order to cause a hysteresis - then $\Delta Th_{AQM}$ is decreased with a positive constant $\delta$ unless the congestion threshold Th has reached a minimum Active Queue Management threshold $Th_{AQMmin}$. If none of these conditions are met, then $\Delta Th_{AQM}$ is left unchanged.

The maximum Active Queue Management threshold $Th_{AQMmax}$ and the minimum Active Queue Management threshold $Th_{AQMmin}$, may be fixed or may be adjusted following the base value $Th_{RRM}$ so that:

$$Th_{AQM} = Th_{RRM} + a \qquad (2)$$

$$Th_{AQM} = Th_{RRM} - b \qquad (3)$$

where a and b are positive constants.

An alternative to analysing whether a packet has been dropped or not is e.g. to look at the buffering delay of each packet. Since the buffering delay is independent of bandwidth it may alternatively also be used as the only means for calculating the congestion threshold.

According to another alternative a maximum Active Queue Management threshold $Th_{AQMmax}$ and a minimum Active Queue Management threshold $Th_{AQMmin}$ are employed in a similar way as above, preferably adjusted following the base value $Th_{RRM}$, but using the base value $Th_{RRM}$ as the congestion threshold Th:

$$Th = Th_{RRM} \qquad (4)$$

Further, when Active Queue Management is to be employed, then for a queue fill level above the maximum Active Queue Management threshold $Th_{AQMmax}$ incoming packets are discarded, for a queue fill level below the minimum Active Queue Management threshold $Th_{AQMmin}$ incoming packets are not discarded, and for a queue fill level between the maximum Active Queue Management threshold $Th_{AQMmax}$ and the minimum Active Queue Management threshold $Th_{AQMmin}$ incoming packets are discarded or marked with a certain probability.

An alternative to using a probabilistic approach when the queue fill level lies between the maximum Active Queue Management threshold $Th_{AQMmax}$ and the minimum Active Queue Management threshold $Th_{AQMmin}$, is to use a counter to allow only one in every (n+1)th packet to be dropped.

Other Active Queue Management algorithms may also be used or adapted in a similar way.

Downswitching may be done by Radio Resource Management primarily for two reasons. A first reason is that less capacity is needed because e.g. a user is needing less bandwidth or goes passive. A second reason is because of resource shortage in the cell due to e.g. many new users or handovers, new services per user, users moving from the cell centre to the cell periphery (thus requiring a higher power, thus causing interference to others) etc

In the first case the capacity after the downswitch will normally be sufficient. If e.g. a user earlier had been allocated a dedicated channel, a hysteresis threshold in the buffer may indicate a low usage. The same threshold as the congestion threshold may of course be used, but it is better to use a hysteresis threshold at a shorter queue length than the congestion threshold, to avoid unnecessary frequent channel switchings. The hysteresis threshold may be fixed, but preferably it is on a fixed distance to the congestion threshold, thus moving when the congestion threshold is moving.

The user of a dedicated channel may now instead be switched to a common channel, which may be sufficient for his needs. Naturally other criteria may be used alternatively to a hysteresis threshold or in combination therewith to take the decision to switch channel. Such criteria may be traffic intensity, packet arrival times, time between packets etc.

In the second case with the forced downswitch, it is a cell congestion. A solution is then to e.g. switch to a lower bit rate for the user in a dedicated channel or for all or some of the users in a common channel. Another solution is to switch the user in a dedicated channel into a common channel - and thus allocating him a lower bitrate. Yet other solutions are to delay the transmission for certain users, to drop low priority calls etc.

Link congestion is, as a consequence, naturally very likely to occur and, depending on the actions taken, probably in more than one link simultaneously. Thus, in the second case the Radio Resource Management should inform the Active Queue Managements for all links or for the affected links of the intention of a forced downswitch. This is preferably done by some type of signalling. Said Active Queue Managements can then take appropriate actions to avoid buffer overflow, such as dropping or marking packets.

For the sake of readability, we have in this disclosure explicitly referred to specific protocols, systems and functions. It should be clear, however, that the present invention is applicable to a broad range of systems, protocols and functions with similar properties as described in this invention disclosure:

The present invention is applicable to any wireless system for packet-data transfer equipped with a resource management function, not only WCDMA. In fact the system need not even be wireless. However, considering that wireless systems have the greatest problems with allocating resources, wireless systems will have the greatest advantages with the present invention

Further, the present invention is applicable independently of the choice of Active Queue Management algorithm. Requirements for the present invention are a method for link congestion detection and a packet dropping/marking policy or other way of alleviating link congestion. A number of such Active Queue Management algorithms exist.

Further, the present invention is applicable to any type of packet-data traffic - not only using TCP - which traffic is equipped with an end-to-end load control mechanism. In particular, we note the ongoing efforts to make non-TCP flows 'TCP-compliant' (TCP Friendly Rate Control, TFRC). The invention is also applicable to non-responsive flows, such as UDP. However, the congestion alleviation procedure in the link buffer may then follow a different pattern, in case the source rate is not reduced as a consequence of packet losses.

**Claims**

1. A method for resource allocation in a packet transmission network including at least one link (19), **characterized by** the following steps:

    - determining link resource status;
    - if link congestion is determined then

        (a) determining if it is possible to allocate more link capacity;
        (b) allocating more link capacity when it is possible to allocate more link capacity;
        (c) alleviating link congestion using Active Queue Management when it is not possible to allocate more link capacity.

2. A method for resource allocation according to claim 1, **characterized by**

    - defining in a buffer (13, 14) for said at least one link (19), a congestion threshold (Th) for packet queue size within said buffer (13, 14); and
    - using said congestion threshold (Th) to detect link congestion when the packet queue size exceeds said congestion threshold (Th).

3. A method for resource allocation according to claim 2, **characterized by**

    - adjusting the congestion threshold (Th) depending on link capacity.

4. A method for resource allocation according to claim 2 or 3, **characterized by**

- adjusting the congestion threshold (Th) depending on whether or not a packet is dropped/marked.

5. A method for resource allocation according to any of the claims 2-4, **characterized by**

- adjusting the congestion threshold depending on buffer delay for a packet in the queue.

6. A method for resource allocation according to any of the claims 2-5, **characterized by**

- defining in the buffer (13, 14) a maximum threshold ($Th_{AQMmax}$) and a minimum threshold ($Th_{AQMmin}$) for packet queue size within said buffer (13, 14).

7. A method for resource allocation according any of the claims 1-6, **characterized by**

- allocating link capacity by changing from a common channel to a dedicated channel.

8. A method for resource allocation according any of the claims 1-6, **characterized by**

- allocating link capacity by changing from a channel with a low bit rate to a channel with a higher bitrate.

9. A method for resource allocation according to claim 1, **characterized by** the following steps

- determining cell resource status;
- if cell congestion is detected then

    (a)determining that it is necessary to switch down bit rate or rates in at least one link (19);
    (b)alleviating link congestion using Active Queue Management (16, 17);
    (c)switching down said bit rate or rates.

10. A method for resource allocation according to claim 9, **characterized by**

- alleviating link congestion for all links (19).

11. A method for resource allocation according to claim 9, **characterized by**

- alleviating link congestion only for the links (19) where link congestion is likely to occur.

12. A method according to claim 1, **characterized by** the following steps

- if low usage of a link (19) is detected then

    (a)determining if it is possible to decrease the link capacity without problems;
    (b)allocating less link capacity, when possible.

13. A method according to any of the claims 1-12, **characterized by**

- alleviating link congestion by dropping or marking packets.

14. A method according to any of the claims 2-13, **characterized by**

- using Active Queue Management separately for each buffer (13, 14).

15. A method according to any of the claims 2-13, **characterized by**

- using a general Active Queue Management for a number of buffers (13, 14); and
- controlling the average traffic in the links associated with said buffers (13, 14).

16. An arrangement for resource allocation in a packet transmission network including at least one link (1), **characterized in that** the arrangement includes a resource management (18) arranged to determine link resource status and arranged, if a link congestion status is determined, to determine if it is possible to allocate more link capacity, to allocate more link capacity when it is possible to allocate more link capacity, and to enable to alleviate link congestion using Active Queue Management (16, 17) when it is not possible to allocate more link capacity.

17. An arrangement for resource allocation according to claim 16, **characterized in that** the arrangement includes a buffer (13, 14) for said at least one link (19), said buffer (13, 14) including a congestion threshold (Th) for packet queue size within said buffer (13, 14), and **in that** said congestion threshold (Th) is arranged to detect link congestion when the packet queue size exceeds said congestion threshold (Th).

18. An arrangement for resource allocation according to claim 17, **characterized in that** the congestion threshold (Th) is arranged to be adjusted depending on the link capacity.

19. An arrangement for resource allocation according to claim 17 or 18, **characterized in that** the congestion threshold (Th) is arranged to be adjusted depending on whether or not a packet is dropped/marked.

20. An arrangement for resource allocation according to any of the claims 17 to 19, **characterized in that** the congestion threshold (Th) is arranged to be adjusted depending on buffer delay for a packet in the queue.

21. An arrangement for resource allocation according to any of the claims 17 to 20, **characterized in that** the buffer (13, 14) includes a maximum threshold ($Th_{AQMmax}$) and a minimum threshold ($Th_{AQMmin}$) for packet queue size within said buffer (13, 14).

22. An arrangement for resource allocation according to claim 16, **characterized in that** the resource management (18) is arranged to determine cell resource status, and arranged, if cell congestion is detected, to determine that it is necessary to switch down bit rate or rates in at least one link (19), to enable to alleviate link congestion using Active Queue Management (16, 17), and to switch down said bit rate or rates.

23. An arrangement for resource allocation according to claim 16, **characterized in that** the resource management (18) is arranged, if low usage of a link (19) is detected, to determine if it is possible to decrease the link capacity without problems, and to allocate less link capacity, when possible.

24. An arrangement for resource allocation according to any of the claims 17-23, **characterized in that** Active Queue Management is arranged to work separately for each buffer (13, 14).

25. An arrangement for resource allocation according to any of the claims 17-23, **characterized in that** Active Queue Management is arranged to work for a number of buffers (13, 14) and to control the average traffic in the links (19) associated with said buffers (13, 14).

**Patentansprüche**

1. Verfahren zur Betriebsmittelzuteilung in einem Paketübertragungsnetz, mindestens einen Link (19) umfassend, **gekennzeichnet durch** folgende Schritte:

    - Ermitteln des Link-Betriebsmittelstatus;
    - falls Linküberlastung ermittelt ist, dann

        (a) Ermitteln, ob es möglich ist, mehr Linkkapazität zuzuteilen;
        (b) Zuteilen von mehr Linkkapazität, wenn es möglich ist, mehr Linkkapazität zuzuteilen;
        (c) Vermindern der Linküberlastung unter Verwendung von aktiver Warteschlangenverwaltung, wenn es nicht möglich ist, mehr Linkkapazität zuzuteilen.

2. Verfahren zur Betriebsmittelzuteilung nach Anspruch 1, **gekennzeichnet durch**

    - in einem Puffer (13, 14) für diesen mindestens einen Link (19) eine Überlastungsschwelle (Th) für Paket-Warteschlangengröße im Puffer (13, 14) definieren; und
    - Verwendung der Überlastungsschwelle (Th) zum Detektieren einer Linküberlastung, wenn die Paket-Warteschlangengröße die Überlastungsschwelle (Th) übersteigt.

**3.** Verfahren zur Betriebsmittelzuteilung nach Anspruch 2, **gekennzeichnet durch**

- Einstellen der Überlastungsschwelle (Th) je nach der Linkkapazität.

**4.** Verfahren zur Betriebsmittelzuteilung nach Anspruch 2 oder 3, **gekennzeichnet durch**

- Einstellen der Überlastungsschwelle (Th) je nachdem, ob ein Paket fallengelassen/markiert wird oder nicht.

**5.** Verfahren zur Betriebsmittelzuteilung nach einem der Ansprüche 2-4, **gekennzeichnet durch**

- Einstellen der Überlastungsschwelle je nach der Pufferverzögerung für ein Paket in der Warteschlange.

**6.** Verfahren zur Betriebsmittelzuteilung nach einem der Ansprüche 2-5, **gekennzeichnet durch**

- im Puffer (13, 14) eine maximale Schwelle ($Th_{AQMmax}$) und eine minimale Schwelle ($Th_{AQMmin}$) für Paket-Warteschlangengröße im Puffer (13, 14) definieren.

**7.** Verfahren zur Betriebsmittelzuteilung nach einem der Ansprüche 1-6, **gekennzeichnet durch**

- Zuteilen von Linkkapazität **durch** Wechseln von einem Gleichkanal auf einen dedizierten Kanal.

**8.** Verfahren zur Betriebsmittelzuteilung nach einem der Ansprüche 1-6, **gekennzeichnet durch**

- Zuteilen von Linkkapazität **durch** Wechseln von einem Kanal mit einer niedrigen Bitrate auf einen Kanal mit einer höheren Bitrate.

**9.** Verfahren zur Betriebsmittelzuteilung nach Anspruch 1, **gekennzeichnet durch** die folgenden Schritte

- Ermitteln des Zellen-Betriebsmittelstatus;
- falls Zellenüberlastung detektiert wird, dann

(a) bestimmen, dass es notwendig ist, die Bitrate oder -raten in mindestens einem Link (19) herunterzuschalten;
(b) Vermindern der Linküberlastung unter Verwendung der aktiven Warteschlangenverwaltung (16, 17);
(c) Herunterschalten der Bitrate oder -raten.

**10.** Verfahren zur Betriebsmittelzuteilung nach Anspruch 9, **gekennzeichnet durch**

- Vermindern der Linküberlastung für alle Links (19).

**11.** Verfahren zur Betriebsmittelzuteilung nach Anspruch 9, **gekennzeichnet durch**

- Vermindern der Linküberlastung nur für die Links (19), bei denen Linküberlastung wahrscheinlich vorkommen wird.

**12.** Verfahren nach Anspruch 1, **gekennzeichnet durch** die folgenden Schritte

- falls geringe Nutzung eines Links (19) detektiert wird, dann

(a) Ermitteln, ob es möglich ist, die Linkkapazität problemlos zu reduzieren;
(b) Zuteilen von weniger Linkkapazität, wenn möglich.

**13.** Verfahren nach einem der Ansprüche 1-12, **gekennzeichnet durch**

- Vermindern der Linküberlastung **durch** Fallenlassen oder Markieren von Paketen.

**14.** Verfahren nach einem der Ansprüche 2-13, **gekennzeichnet durch**

- für jeden Puffer (13, 14) getrenntes Verwenden von aktiver Warteschlangenverwaltung.

**15.** Verfahren nach einem der Ansprüche 2-13, **gekennzeichnet durch**

- für eine Anzahl von Puffern (13, 14) getrenntes Verwenden einer aktiven Warteschlangenverwaltung; und
- Steuern des Durchschnittsverkehrs in den mit den Puffern (13, 14) assoziierten Links.

**16.** Anordnung zur Betriebsmittelzuteilung in einem Paketübertragungsnetz, mindestens einen Link (1) enthaltend, **dadurch gekennzeichnet, dass** die Anordnung eine Betriebsmittelverwaltung (18) enthält, die dazu angeordnet ist, den Link-Betriebsmittelstatus zu ermitteln, und dazu angeordnet ist, falls ein Linküberlastungsstatus ermittelt wird, zu ermitteln, ob es möglich ist, mehr Linkkapazität zuzuteilen; mehr Linkkapazität zuzuteilen, wenn es möglich ist, mehr Linkkapazität zuzuteilen, und zu ermöglichen, Linküberlastung unter Verwendung von aktiver Warteschlangenverwaltung (16, 17) zu vermindern, wenn es nicht möglich ist, mehr Linkkapazität zuzuteilen.

**17.** Anordnung zur Betriebsmittelzuteilung nach Anspruch 16, **dadurch gekennzeichnet, dass** die Anordnung einen Puffer (13, 14) für den mindestens einen Link (19) enthält, wobei der Puffer (13, 14) eine Überlastungsschwelle (Th) für Paket-Warteschlangengröße im Puffer (13, 14) enthält, und dass die Überlastungsschwelle (Th) dazu angeordnet ist, Linküberlastung zu detektieren, wenn die Paket-Warteschlangengröße die Überlastungsschwelle (Th) übersteigt.

**18.** Anordnung zur Betriebsmittelzuteilung nach Anspruch 17, **dadurch gekennzeichnet, dass** die Überlastungsschwelle (Th) dazu angeordnet ist, je nach der Linkkapazität eingestellt zu werden.

**19.** Anordnung zur Betriebsmittelzuteilung nach Anspruch 17 oder 18, **dadurch gekennzeichnet, dass** die Überlastungsschwelle (Th) dazu angeordnet ist, eingestellt zu werden je nachdem, ob ein Paket fallengelassen/markiert wird oder nicht.

**20.** Anordnung zur Betriebsmittelzuteilung nach einem der Ansprüche 17 bis 19, **dadurch gekennzeichnet, dass** die Überlastungsschwelle (Th) dazu angeordnet ist, je nach der Pufferverzögerung für ein Paket in der Warteschlange eingestellt zu werden.

**21.** Anordnung zur Betriebsmittelzuteilung nach Anspruch 17 bis 20, **dadurch gekennzeichnet, dass** der Puffer (13, 14) eine maximale Schwelle ($Th_{AQMmax}$) und eine minimale Schwelle ($Th_{AQMmin}$) für Paket-Warteschlangengröße im Puffer (13, 14) enthält.

**22.** Anordnung zur Betriebsmittelzuteilung nach Anspruch 16, **dadurch gekennzeichnet, dass** die Betriebsmittelverwaltung (18) dazu angeordnet ist, den Zellen-Betriebsmittelstatus zu bestimmen, und dazu angeordnet ist, falls Zellenüberlastung detektiert wird, zu bestimmen, dass es notwendig ist, die Bitrate oder

- raten in mindestens einem Link (19) herunterzuschalten, um zu ermöglichen, dass die Linküberlastung unter Verwendung der aktiven Warteschlangenverwaltung (16, 17) vermindert wird und die Bitrate oder
- raten heruntergeschaltet werden.

**23.** Anordnung zur Betriebsmittelzuteilung nach Anspruch 16, **dadurch gekennzeichnet, dass** die Betriebsmittelverwaltung (18) dazu angeordnet ist, falls geringe Nutzung eines Links (19) detektiert wird, zu ermitteln, ob es möglich ist, die Linkkapazität problemlos zu reduzieren, und wenn möglich weniger Linkkapazität zuzuteilen.

**24.** Anordnung zur Betriebsmittelzuteilung nach einem der Ansprüche 17-23, **dadurch gekennzeichnet, dass** die aktive Warteschlangenverwaltung dazu angeordnet ist, für jeden Puffer (13, 14) getrennt zu arbeiten.

**25.** Anordnung zur Betriebsmittelzuteilung nach einem der Ansprüche 17-23, **dadurch gekennzeichnet, dass** die aktive Warteschlangenverwaltung dazu angeordnet ist, für eine Anzahl von Puffern (13, 14) zu arbeiten und den Durchschnittsverkehr in den mit den Puffern (13, 14) assoziierten Links (19) zu steuern.

**Revendications**

**1.** Procédé pour une allocation de ressource dans un réseau de transmission par paquets incluant au moins une liaison (19), **caractérisé par** les étapes qui suivent:

- détermination d'un état de ressource de liaison;
- si une congestion de liaison est déterminée, alors

(a) détermination de la possibilité ou non d'allouer plus de capacité de liaison;
(b) allocation de plus de capacité de liaison lorsqu'il est possible d'allouer plus de capacité de liaison;
(c) allègement d'une congestion de liaison en utilisant une gestion en file d'attente active lorsqu'il n'est pas possible d'allouer plus de capacité de liaison.

**2.** Procédé pour une allocation de ressource selon la revendication 1, **caractérisé par**:

- la définition dans un tampon (13, 14) pour ladite au moins une liaison (19), d'un seuil de congestion (Th) pour une dimension de file d'attente de paquets à l'intérieur dudit tampon (13, 14); et
- l'utilisation dudit seuil de congestion (Th) pour détecter une congestion de liaison lorsque la dimension de file d'attente de paquets excède ledit seuil de congestion (Th).

**3.** Procédé pour une allocation de ressource selon la revendication 2, **caractérisé par**:

- le réglage du seuil de congestion (Th) en fonction d'une capacité de liaison.

**4.** Procédé pour une allocation de ressource selon la revendication 2 ou 3, **caractérisé par**:

- le réglage du seuil de congestion (Th) en fonction de si oui ou non un paquet est perdu/marqué.

**5.** Procédé pour une allocation de ressource selon l'une quelconque des revendications 2 à 4, **caractérisé par**:

- le réglage du seuil de congestion en fonction d'un retard de tampon pour un paquet dans la file d'attente.

**6.** Procédé pour une allocation de ressource selon l'une quelconque des revendications 2 à 5, **caractérisé par**:

- la définition dans le tampon (13, 14) d'un seuil maximum ($Th_{AQMax}$) et d'un seuil minimum ($Th_{AQMin}$) pour une dimension de file d'attente de paquets à l'intérieur dudit tampon (13, 14).

**7.** Procédé pour une allocation de ressource selon l'une quelconque des revendications 1 à 6, **caractérisé par**:

- l'allocation d'une capacité de liaison en passant d'un canal commun à un canal dédié.

**8.** Procédé pour une allocation de ressource selon l'une quelconque des revendications 1 à 6, **caractérisé par**:

- une allocation d'une capacité de liaison en passant d'un canal ayant un débit binaire faible à un canal ayant un débit binaire plus élevé.

**9.** Procédé pour une allocation de ressource selon la revendication 1, **caractérisé par** les étapes qui suivent:

- détermination d'un état de ressource de cellule;
- si une congestion de cellule est détectée, alors

(a) détermination de la nécessité de commuter sur un niveau diminué un débit ou des débits binaire(s) dans au moins une liaison (19);
(b) allègement d'une congestion de liaison en utilisant une gestion par file d'attente active (16, 17);
(c) commutation sur un niveau diminué dudit débit ou desdits débits binaire(s).

**10.** Procédé pour une allocation de ressource selon la revendication 9, **caractérisé par**:

- l'allègement d'une congestion de liaison pour toutes les liaisons (19).

**11.** Procédé pour une allocation de ressource selon la revendication 9, **caractérisé par**:

- l'allègement d'une congestion de liaison seulement pour les liaisons (19) pour lesquelles une congestion de liaison est susceptible de se produire.

**12.** Procédé selon la revendication 1, **caractérisé par** les étapes qui suivent:

- si une utilisation faible d'une liaison (19) est détectée, alors

(a) détermination de la possibilité ou non de diminuer la capacité de liaison sans problème;
(b) allocation d'une capacité de liaison moindre lorsque cela est possible.

**13.** Procédé selon l'une quelconque des revendications 1 à 12, **caractérisé par**:

- l'allégement d'une congestion de liaison en perdant ou en marquant des paquets.

**14.** Procédé selon l'une quelconque des revendications 2 à 13, **caractérisé par**:

- l'utilisation d'une gestion par file d'attente active séparément pour chaque tampon (13, 14).

**15.** Procédé selon l'une quelconque des revendications 2 à 13, **caractérisé par**:

- l'utilisation d'une gestion par file d'attente active générale pour un certain nombre de tampons (13, 14); et
- la commande du trafic moyen dans les liaisons associées auxdits tampons (13, 14).

**16.** Agencement pour une allocation de ressource dans un réseau de transmission par paquets incluant au moins une liaison (1), **caractérisé en ce que** l'agencement inclut une gestion de ressource (18) agencée pour déterminer un état de ressource de liaison et agencée, si un état de congestion de liaison est déterminé, pour déterminer s'il est possible d'allouer plus de capacité de liaison, pour allouer plus de capacité de liaison lorsqu'il est possible d'allouer plus de capacité de liaison et pour permettre d'alléger une congestion de liaison en utilisant une gestion par file d'attente active (16, 17) lorsqu'il n'est pas possible d'allouer plus de capacité de liaison.

**17.** Agencement pour une allocation de ressource selon la revendication 16, **caractérisé en ce que** l'agencement inclut un tampon (13, 14) pour ladite au moins une liaison (19), ledit tampon (13, 14) incluant un seuil de congestion (Th) pour une dimension de file d'attente de paquets à l'intérieur dudit tampon (13, 14) et **en ce que** ledit seuil de congestion (Th) est agencé pour détecter une congestion de liaison lorsque la dimension de file d'attente de paquets excède ledit seuil de congestion (Th).

**18.** Agencement pour une allocation de ressource selon la revendication 17, **caractérisé en ce que** le seuil de congestion (Th) est agencé pour être réglé en fonction de la capacité de liaison.

**19.** Agencement pour une allocation de ressource selon la revendication 17 ou 18, **caractérisé en ce que** le seuil de congestion (Th) est agencé pour être réglé en fonction de si oui ou non un paquet est perdu/marqué.

**20.** Agencement pour une allocation de ressource selon l'une quelconque des revendications 17 à 19, **caractérisé en ce que** le seuil de congestion (Th) est agencé pour être réglé en fonction d'un retard de tampon pour un paquet dans la file d'attente.

**21.** Agencement pour une allocation de ressource selon l'une quelconque des revendications 17 à 20, **caractérisé en ce que** le tampon (13, 14) inclut un seuil maximum ($Th_{AQMax}$) et un seuil minimum ($Th_{AQMin}$) pour une dimension de file d'attente de paquets à l'intérieur dudit tampon (13, 14).

**22.** Agencement pour une allocation de ressource selon la revendication 16, **caractérisé en ce que** la gestion de ressource (18) est agencée pour déterminer un état de ressource de cellule et est agencée, si une congestion de cellule est détectée, pour déterminer la nécessité de commuter sur un niveau diminué un ou des débits binaires dans au moins une liaison (19) pour permettre d'alléger une congestion de liaison en utilisant une gestion de file d'attente active (16, 17) et pour commuter sur un niveau diminué ledit ou lesdits débits binaires.

**23.** Agencement pour une allocation de ressource selon la revendication 16, **caractérisé en ce que** la gestion de ressource (18) est agencée, si une utilisation faible d'une liaison (19) est détectée, pour déterminer s'il est possible de diminuer la capacité de liaison sans problème et pour allouer une capacité de liaison moindre lorsque cela est possible.

24. Agencement pour une allocation de ressource selon l'une quelconque des revendications 17 à 23, **caractérisé en ce qu'**une gestion par file d'attente active est agencée de manière à fonctionner séparément pour chaque tampon (13, 14).

25. Agencement pour une allocation de ressource selon l'une quelconque des revendications 17 à 23, **caractérisé en ce qu'**une gestion par file d'attente active est agencée pour fonctionner pour un certain nombre de tampons (13, 14) et pour commander le trafic moyen dans les liaisons (19) associées auxdits tampons (13, 14).

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1249972 A
- GB 2372172 A
- EP 1128610 A
- WO 9966748 A

### Non-patent literature cited in the description

- **FLOYD, S. ; JACOBSON, V.** Random Early Detection Gateways for Congestion Avoidance. *IEEE/ACM Transactions on Networking,* August 1993, vol. 1 (4